# DEMANDE DE BREVET EUROPEEN

(11) **EP 3 021 594 A1**
(43) Date de publication de la demande: **18.05.2016**
(21) Numéro de dépôt: 15194772.8
(22) Date de dépôt: 16.11.2015
(51) Int. Cl.: H04N 21/475, H04N 21/466, H04N 21/431, H04N 21/472, H04N 21/442

(54) **PROCÉDÉ DE CLASSEMENT D'UN CONTENU ET RECOMMANDATION DE CONTENU DANS UN GUIDE ÉLECTRONIQUE DES PROGRAMMES**

(30) Priorité: 17.11.2014 FR 1461077
(71) Demandeur: Groupe Canal+, 92130 Issy les Moulineaux (FR)
(72) Inventeur: SERRALTA, Lucas, 75009 Paris (FR)
(74) Mandataire: Santarelli

(57) **Abrégé**

La présente invention concerne le domaine des guides électroniques des programmes (ou « EPG ») et plus particulièrement celui de la recommandation de contenu vidéo dans de tels guides. Selon l'invention, un terminal reçoit une instruction de sélection, par un utilisateur, d'un contenu dans un EPG ; lit et affiche le contenu sélectionné ; détecte un événement de sortie mettant fin à l'affichage du contenu lors de sa lecture ; puis en réponse à l'événement de sortie, sélectionne entre un premier écran interactif et un deuxième écran interactif comprenant des icônes différents de notation du contenu puis l'affiche à l'utilisateur, ladite sélection étant fonction de la position courante de lecture lors de l'événement de sortie ; reçoit une instruction de sélection, par l'utilisateur, d'une des icônes sélectionnables. Ces notes attribuées par l'utilisateur peuvent alors être utilisées par le moteur de recommandation au sein de l'EPG.

## Description

### DOMAINE DE L'INVENTION

La présente invention concerne le domaine des guides électroniques des programmes (ou « EPG ») et plus particulièrement celui de la recommandation de contenu vidéo dans de tels guides.

### CONTEXTE DE L'INVENTION

Les EPG sont des interfaces homme-machine (IHM) constituées de pages graphiques interactives, utilisées pour fournir des informations sur des services et contenus multimédias disponibles soit à la demande (par exemple pour la vidéo à la demande, VOD ou SVOD), soit en diffusion en direct (signaux de télévision), et ainsi aider un utilisateur à naviguer parmi le large choix de services et contenus et sélectionner précisément et rapidement un contenu vidéo auquel il souhaite accéder. Les contenus vidéos sont typiquement des films, des séries, des documentaires ou reportages, des dessins animés, etc.

Les EPG sont traditionnellement mis en oeuvre dans des terminaux numériques ou dispositifs utilisateurs, connus sous l'appellation anglo-saxonne de *« Set Top Box ».* Un dispositif d'affichage relié au terminal permet l'affichage de l'EPG et la navigation dans celui-ci par l'utilisateur, notamment à l'aide d'une télécommande.

Devant le nombre croissant de contenus vidéos disponibles sur les chaînes de diffusion en direct ou dans les catalogues de vidéo à la demande, des moteurs de recommandation ont été développés pour suggérer à l'utilisateur des contenus vidéos en adéquation avec son profil et ses préférences, ses habitudes de consommation, voire son humeur. Cette approche dynamique de l'EPG a rencontré un vif succès.

Dans les services de vidéo à la demande existants, tel que Netflix (com commercial), il est possible d'affecter une note aux contenus vidéos visionnés, cette note étant prise en compte par le moteur de recommandation pour suggérer, à l'utilisateur, de nouveaux films à visionner.

En pratique, l'utilisateur doit volontairement accéder à un sous-menu listant les contenus vidéos déjà visionnés, afin de noter tout ou partie de ceux-ci sur une échelle allant de zéro à cinq étoiles. Cette approche n'est techniquement pas satisfaisante car il s'avère que l'utilisateur est généralement réticent à parcourir volontairement des sous-menus de l'EPG dans ce but unique. Cette approche ne fait que dégrader l'expérience utilisateur.

De ce fait, les recommandations proposées sont rarement basées sur une notation des contenus vidéos visionnés, mais plutôt sur un historique de consommation. Ainsi, les recommandations proposées sont en moyenne assez éloignées des attentes des utilisateurs.

Dans ce contexte, il existe un besoin de faciliter l'interaction des services multimédias avec l'utilisateur dans l'optique de récupérer des informations, par exemple de notation, sur la base desquelles des recommandations peuvent être formulées. Cette facilitation a aussi pour objectif d'améliorer l'expérience utilisateur dans les EPG.

Il existe également un besoin d'améliorer la pertinence des recommandations produites, également pour améliorer l'expérience utilisateur dans ces services multimédias.

L'invention s'inscrit dans ce cadre.

### RESUME DE L'INVENTION

Un premier aspect de l'invention concerne un procédé comprenant les étapes suivantes, dans un dispositif utilisateur :
recevoir un signal représentatif d'une instruction de sélection, par un utilisateur, d'au moins un contenu vidéo dans un guide électronique des programmes affiché à l'utilisateur ;
générer un signal d'affichage apte à provoquer un affichage, sur un dispositif d'affichage relié audit dispositif utilisateur, du contenu vidéo sélectionné ;
détecter un événement de sortie mettant fin à l'affichage du contenu vidéo lors de sa lecture ;
en réponse à l'événement de sortie détecté, sélectionner en mémoire un écran interactif parmi un premier écran interactif comprenant un ou plusieurs éléments de classement sélectionnables pour classer le contenu vidéo lu et un deuxième écran interactif comprenant un ou plusieurs éléments de classement sélectionnables différents du premier écran interactif pour classer le contenu vidéo lu, ladite sélection entre le premier et le deuxième écran interactif étant fonction de la position de lecture du contenu vidéo lors de la détection de l'événement de sortie ; et générer un signal d'affichage apte à provoquer un affichage, sur le dispositif d'affichage, du menu interactif sélectionné ;
recevoir un signal représentatif d'une instruction de sélection, par l'utilisateur dans le menu interactif affiché, du ou de l'un des éléments sélectionnables de classement pour le contenu vidéo ;
stocker en mémoire une information représentative de l'élément de classement sélectionné pour l'au moins un contenu vidéo lu ;
obtenir une information de recommandation de contenu vidéo en fonction de l'élément de classement mémorisé pour l'au moins un contenu vidéo lu ; et
générer un signal d'affichage apte à provoquer un affichage, sur le dispositif d'affichage, de l'information de recommandation dans le guide électronique des programmes.

Corrélativement, le premier aspect de l'invention concerne également un dispositif utilisateur comportant une unité de traitement configurée pour :
recevoir un signal représentatif d'une instruction de sélection, par un utilisateur, d'au moins un contenu vidéo dans un guide électronique des programmes affiché à l'utilisateur ;
générer un signal d'affichage apte à provoquer un affichage, sur un dispositif d'affichage relié audit dispositif utilisateur, du contenu vidéo sélectionné ;
détecter un événement de sortie mettant fin à l'affichage du contenu vidéo lors de sa lecture ;
en réponse à l'événement de sortie détecté, sélectionner en mémoire un écran interactif parmi un premier écran interactif comprenant un ou plusieurs éléments de classement sélectionnables pour classer le contenu vidéo lu et un deuxième écran interactif comprenant un ou plusieurs éléments de classement sélectionnables différents du premier écran interactif pour classer le contenu vidéo lu, ladite sélection entre le premier et le deuxième écran interactif étant fonction de la position de lecture du contenu vidéo lors de la détection de l'événement de sortie ; et générer un signal d'affichage apte à provoquer un affichage, sur le dispositif d'affichage, du menu interactif sélectionné ;
recevoir un signal représentatif d'une instruction de sélection, par l'utilisateur dans le menu interactif affiché, du ou de l'un des éléments sélectionnables de classement pour le contenu vidéo ;
stocker en mémoire une information représentative de l'élément de classement sélectionné pour l'au moins un contenu vidéo lu ;
obtenir une information de recommandation de contenu vidéo en fonction de l'élément de classement mémorisé pour l'au moins un contenu vidéo lu ; et
générer un signal d'affichage apte à provoquer un affichage, sur le dispositif d'affichage, de l'information de recommandation dans le guide électronique des programmes ;
et comportant une unité de communication configurée pour transmettre les signaux d'affichage au dispositif d'affichage.

La présente invention permet de fluidifier, et donc faciliter, l'interaction avec l'utilisateur lors de la récupération d'informations utilisées dans le cadre de la recommandation de contenu vidéo. En effet, un événement de sortie de lecture du contenu vidéo en cours de visionnage est désormais détecté et pris en compte pour déclencher la récupération en mémoire et l'affichage d'une interface permettant la collecte de telles informations, ici un classement ou notation du contenu vidéo. L'utilisateur n'a ainsi plus besoin de réaliser une démarche volontaire et longue pour accéder à des sous-menus. L'expérience utilisateur s'en trouve améliorée.

En outre, par la démarche déclarative proposée au travers d'éléments sélectionnables correspondants à des niveaux de classements, le moteur de recommandation est capable de générer des recommandations plus pertinentes pour l'utilisateur. Encore une fois, l'expérience utilisateur s'en trouve améliorée.

Enfin, la présence contextuelle (en fonction de la position de lecture lors de la sortie du contenu vidéo visionné) des éléments de classement sélectionnables dans l'écran interactif sélectionné lors de la sortie de la lecture permet d'adapter les interactions avec l'utilisateur, voire de les limiter. Ainsi, des interactions inutiles selon le contexte sont évitées, et l'expérience utilisateur s'en trouve améliorée pour une même qualité de recommandation. Notamment, seules des interactions qui se révèlent pertinentes dans l'optique des recommandations de contenu vidéo peuvent être conservées pour un contexte donné.

Le procédé selon la présente invention offre ainsi un effet technique qui se manifeste par un accès plus rapide et plus efficace à des contenus pertinents recommandés, c'est-à-dire avec moins d'actions pour l'utilisateur, malgré le grand volume de contenus vidéos disponibles. De façon symétrique, cela réduit la charge de traitement pour le terminal utilisateur et/ou un serveur central.

D'autres caractéristiques des procédé et dispositif utilisateur selon des modes de réalisation sont décrites dans les revendications dépendantes, essentiellement à l'aide d'une terminologie de procédé, transposables par conséquent au dispositif utilisateur ou à un système incluant le dispositif utilisateur.

Dans un mode de réalisation, le premier menu interactif est sélectionné lorsque la position de lecture en sortie de lecture est antérieure à une première position seuil de lecture du contenu vidéo, et le deuxième menu interactif, comprenant un nombre d'éléments de classement sélectionnables différent de celui du premier menu interactif, est sélectionné lorsque la position de lecture en sortie de lecture est postérieure à la première position seuil de lecture.

Cette distinction permet d'adapter précisément les possibilités de classement à différents stades d'avancement dans la lecture du contenu vidéo. En effet, il a été constaté que les retours (« *feedbacks* » en langue anglo-saxonne) des utilisateurs sont généralement unidirectionnels lorsqu'une faible part du contenu vidéo a été consommée. Ainsi, le premier écran interactif peut être allégé en nombre d'éléments de classement sélectionnables, utilisés par la suite pour les recommandations de contenu vidéo. Il en résulte, pour l'utilisateur, une interaction optimisée et réduite.

Selon une caractéristique particulière, la première position seuil de lecture est définie par un marqueur temporel inséré dans le contenu vidéo lu ou est définie par un pourcentage préfixé dudit contenu vidéo lu, par exemple 85% de la longueur du contenu vidéo.

Grâce au marqueur, il est ainsi possible d'indiquer assez précisément une position à partir de laquelle il peut être considéré que l'utilisateur a suffisamment consommé le contenu vidéo pour pouvoir le classer ou le noter de façon efficace pour les recommandations. A titre d'exemple, le marqueur peut être sensiblement positionné au début du générique de fin du contenu vidéo.

Selon une autre caractéristique particulière, le premier menu interactif comprend un seul élément sélectionnable de classement du contenu vidéo et le deuxième menu interactif comprend plusieurs, par exemple deux ou trois, éléments sélectionnables de classement du contenu vidéo.

Cette configuration ressort de constatations faites par les inventeurs selon lesquelles l'utilisateur qui n'a pas suffisamment consommé le contenu vidéo est enclin à seulement affecter un classement peu favorable à la recommandation. En limitant le premier menu interactif à uniquement un élément sélectionnable de classement correspondant, on favorise l'interactivité avec l'utilisateur.

Dans un mode de réalisation particulier, le premier menu interactif peut également comprendre, outre l'élément sélectionnable de classement du contenu vidéo, un élément sélectionnable par l'utilisateur pour poursuivre immédiatement la lecture du contenu vidéo et/ou un autre élément sélectionnable par l'utilisateur pour mémoriser la position de lecture du contenu vidéo lors de la détection de l'événement de sortie et permettre une reprise ultérieure de la lecture du contenu vidéo à partir de ladite position de lecture.

L'interactivité avec l'utilisation est ainsi accrue.

Selon encore une autre caractéristique particulière, la sélection d'un écran interactif parmi les premier et deuxième écrans interactifs est effectuée uniquement lorsque la position de lecture du contenu vidéo lors de la détection de l'événement de sortie est postérieure à une deuxième position seuil de lecture, par exemple 3% de la longueur du contenu vidéo.

Ainsi, dans le cas contraire, un troisième menu interactif exempt d'élément sélectionnable de classement du contenu vidéo peut être sélectionné en mémoire et affiché à l'utilisateur. Ce troisième écran peut simplement être la « fiche film » correspondant au contenu vidéo dont la lecture vient d'être arrêtée.

En effet, avant cette deuxième position seuil, on peut considérer que l'utilisateur n'a pas pu se faire un avis sur le contenu vidéo visionné. On favorise à nouveau l'interactivité avec l'utilisateur puisque dans ce cas on évite des interactions inutiles, tout en garantissant une recommandation efficace de contenu.

Selon encore une autre caractéristique particulière, la sélection d'un écran interactif parmi les premier et deuxième écrans interactifs est effectuée uniquement lorsque ledit contenu vidéo n'a pas déjà été classé. Dans ce cas, un retour à la « fiche film » peut être envisagé.

Dans un autre mode de réalisation, le ou les éléments sélectionnables de classement sont une ou des icônes distinctes sélectionnables par l'utilisateur.

De telles icônes sélectionnables permettent de simplifier les actions de l'utilisateur et donc de faciliter l'utilisation de l'EPG.

Dans un autre mode de réalisation qui peut faire l'objet séparément d'un second aspect distinct de l'invention, obtenir une information de recommandation de contenu vidéo comprend :
recevoir un signal représentatif d'une instruction de l'utilisateur naviguant dans le guide électronique des programmes, pour l'obtention de données supplémentaires d'un second contenu vidéo;
en réponse à la réception de l'instruction pour l'obtention de données supplémentaires, obtenir une information d'identification, parmi une pluralité de contenus vidéos stockés en mémoire, d'un contenu vidéo que l'utilisateur a préalablement classé dans un classe prédéfinie et qui est proche dudit second contenu vidéo compte tenu d'une distance mathématique calculée sur la base de mots clés d'indexation des contenus vidéo ; et
utiliser l'information d'identification obtenue dudit contenu vidéo proche en tant qu'information de recommandation.

Cette configuration est inverse aux recommandations classiquement mises en oeuvre dans les techniques connues. En effet, ici il n'est pas question de suggérer un nouveau contenu vidéo non choisi par l'utilisateur, mais de garantir le choix courant du second contenu vidéo par l'information de recommandation, en l'espèce par référence à un précédent contenu vidéo, par exemple déjà apprécié par l'utilisateur (c'est-à-dire classé dans une classe prédéfinie).

L'interaction avec l'utilisateur et l'expérience utilisateur sont améliorées car l'utilisateur n'a plus à parcourir plusieurs recommandations (dont la pertinence s'avère en pratique contestable) pour trouver un contenu vidéo d'intérêt, mais c'est le choix de l'utilisateur dans sa navigation qui se trouve être conforté par la recommandation ainsi produite.

Selon une caractéristique particulière, ladite information de recommandation comprend en outre au moins un mot clé d'indexation liant le second contenu vidéo audit contenu vidéo proche.

A titre d'exemple, il peut s'agit d'au moins un mot clé d'indexation en commun pour les deux contenus vidéos considérés. Il peut prendre la forme d'une expression sémantique telle qu'évoquée par la suite.

Cette disposition améliore l'expérience utilisateur, réduit le temps passé par l'utilisateur pour sélectionner un nouveau contenu vidéo et par conséquent réduit les traitements sur le terminal utilisateur et/ou sur un serveur distant. En effet, le mot clé d'indexation commun, en tant qu'indicateur de la proximité ou de la corrélation entre les deux contenus vidéo, offre un indicateur décisionnel supplémentaire et pertinent pour l'utilisateur.

Selon une autre caractéristique particulière, le procédé comprend en outre, en réponse à la réception de l'instruction pour l'obtention de données supplémentaires :
obtenir des données supplémentaires du second contenu vidéo ;
générer un signal d'affichage apte à provoquer un affichage, sur le dispositif d'affichage, des données supplémentaires du second contenu vidéo en même temps que l'information de recommandation.

Cette disposition renforce encore l'interaction avec l'utilisateur et l'expérience utilisateur.

Dans un autre mode de réalisation, l'événement de sortie comprend la réception d'un signal représentatif d'une instruction de l'utilisateur pour l'arrêt de la lecture du contenu vidéo ou comprend l'atteinte de la fin du contenu vidéo.

Ainsi, la présentation du premier ou deuxième écran interactif est effectuée soit lorsque l'utilisateur arrête volontairement le contenu vidéo en cours de visionnage, soit lorsque ce dernier se termine (auquel cas le deuxième écran interactif peut être systématiquement affiché).

### BREVE DESCRIPTION DES FIGURES

D'autres particularités et avantages de l'invention apparaîtront encore dans la description ci-après, illustrée par les dessins ci-joints, dans lesquels :
- la **Figure 1** illustre un contexte général de mise en oeuvre de modes de réalisation de l'invention ;
- la **Figure 2** représente, sous forme de logigramme, un exemple de procédé selon des modes de réalisation de l'invention ;
- la **Figure 3** illustre une fiche film ou fiche programme utilisée dans le procédé de la **Figure 2** **;**
- les **Figures 4** et **5** illustrent des exemples de premier et deuxième écrans interactifs mis en oeuvre par un premier aspect de l'invention ;
- la **Figure 6** illustre une fiche film lors de la mise en oeuvre d'un deuxième aspect de l'invention ; et
- la **Figure 7** illustre schématiquement un dispositif selon des modes de réalisation.

### DESCRIPTION DETAILLEE DE L'INVENTION

Comme décrit dans la suite de la description, les modes de réalisation de l'invention offrent un moyen de naviguer de manière simple rapide et efficace dans une interface homme-machine (IHM) permettant la sélection de contenus vidéo, c'est-à-dire dans un guide électronique des programmes mis en oeuvre dans un terminal utilisateur type set-top box.

Dans la suite de la description, lorsqu'il est fait référence à la sélection d'une icône (ou de façon générale d'un élément sélectionnable), il s'agit de placer un curseur, avec des touches directionnelles d'une télécommande par exemple, sur l'icône sans pour autant enclencher la mise en oeuvre de la fonctionnalité associée. Pour déclencher cette mise en oeuvre, la sélection doit être confirmée par exemple en pressant une touche de validation ou d'activation, lorsque l'icône est sélectionnée.

Une icône est une image représentant une fonctionnalité et permettant de la mettre en oeuvre de manière rapide par sélection et confirmation de la sélection de l'icône.

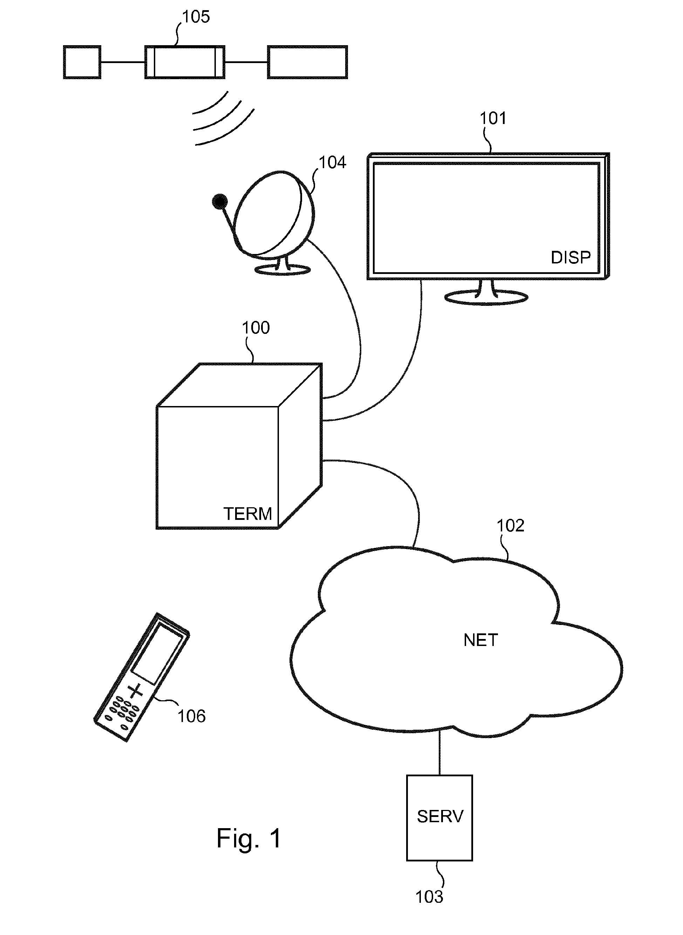

La **Figure 1** illustre un contexte général de mise en oeuvre de modes de réalisation de l'invention.

Un dispositif utilisateur 100 (TERM) pour l'accès à un guide électronique des programmes (EPG) est connecté à un écran d'affichage 101 (DISP). L'écran 101 peut être commandé par le dispositif 100 pour afficher du contenu vidéo ou des données d'interface pour permettre à un utilisateur de naviguer parmi un catalogue ou une grille des programmes de contenus vidéos proposés dans l'EPG.

Le dispositif utilisateur 100 comprend en mémoire un programme informatique pré-chargé pour la mise en oeuvre de l'EPG. Le programme informatique exécuté par le dispositif utilisateur 100 gère l'interactivité de l'EPG, c'est-à-dire définit des pages types ou modèles comprenant des icônes de navigation et définit les effets de la sélection d'une des icônes aux fins de procurer une navigation dans l'EPG. L'EPG permet ainsi à l'utilisateur de sélectionner un ou des contenus à regarder.

Le dispositif 100 peut notamment donner accès à l'utilisateur à des chaînes de télévision, des stations de radio, des programmes à la demande (films, rediffusion d'évènements ou autre), ou même à Internet.

Les contenus auxquels l'utilisateur a accès peuvent être associés à des données descriptives (titre, acteurs, synopsis, affiche, critiques, horaire, etc.). Par exemple, un programme diffusé sur une chaîne de télévision peut être associé à un horaire de diffusion, un résumé, ou autre. Ces données peuvent être utiles à l'utilisateur pour choisir un programme à regarder.

L'EPG s'appuie sur une ou plusieurs bases de données qui comprennent ces données descriptives de contenus vidéos et qui comprennent également lesdits contenus vidéos lorsque ceux-ci ne sont pas diffusés en direct (par exemple VOD). Les données descriptives à ajouter aux pages types définies dans l'EPG sont ainsi récupérés de ces bases de données, sur requête du terminal utilisateur (selon une relation client/serveur).

Dans le cas de la VOD, les bases de données de contenus vidéos (par exemple des films) sont stockées dans un serveur distant 103 (SERV), accessible au travers d'un réseau de communication 102 (NET), filaire ou non. Ainsi, lorsque l'utilisateur sélectionne une icône déclenchant la lecture d'un contenu vidéo, le dispositif utilisateur déclenche une procédure de lecture (ouverture d'un lecteur multimédia pour affichage sur l'écran) qui inclut l'envoi de requêtes au serveur distant 103 pour la récupération des données de contenu vidéo.

Tout ou partie des bases de données descriptives (ou autres, par exemple publicitaires, etc.) peut être local audit dispositif utilisateur 100 auquel cas un téléchargement de celles-ci (mises à jour) peut être effectué régulièrement (notamment pour une grille des programmes TV) à partir du serveur distant 103 (SERV) au travers du réseau de communication 102 (NET).

De préférence, notamment en cas de vidéo à la demande (VOD, SVOD), ces bases de données sont hébergées par le serveur distant 103 (SERV), conduisant le dispositif utilisateur 100 à envoyer des requêtes au serveur distant 103 lorsqu'une nouvelle page de l'EPG est à afficher, après sélection d'une icône par l'utilisateur pour naviguer vers une nouvelle page de l'EPG.

Le dispositif 100 peut par ailleurs recevoir d'autres données comme des données de mise à jour du programme informatique gérant le fonctionnement du dispositif (« *firmware* » en terminologie anglo-saxonne). Alternativement, ou en combinaison, le dispositif 100 reçoit le contenu audiovisuel et/ou les autres données via une antenne 104 (par exemple une antenne parabolique) depuis une antenne ou un satellite 105 d'un réseau de radiodiffusion (par exemple par satellite ou TNT, sigle de «Télévision Numérique Terrestre »). Le dispositif 100 peut ainsi recevoir ces données via le réseau 102 qui peut être le réseau Internet, via le réseau de radiodiffusion (satellitaire ou TNT) et/ou de manière hybride via ces deux réseaux. Le dispositif 100 est également associé à une télécommande 106 permettant à l'utilisateur d'interagir avec le dispositif.

Le serveur distant 103 comprend, outre les bases de données descriptives et de contenus vidéo pour la VOD, un module de gestion de profils utilisateurs et un moteur de recommandation.

Le module de gestion de profils utilisateurs permet aux utilisateurs de se connecter au service VOD ou TV à partir de n'importe quel terminal utilisateur. Par exemple, une interface proposée au lancement de l'EPG sur un terminal invite l'utilisateur à se connecter, et donc à récupérer les préférences définies dans son profil stocké sur le serveur 103, afin de personnaliser l'interface EPG qui lui est affichée.

Le moteur de recommandation est de type connu, par exemple le moteur proposé par la société SPIDEO (nom commercial) et reposant sur tout ou partie de quatre briques : Kinoprofil, Kinograph, Kinomix et Kinosocial (noms commerciaux) décrites dans le document « *spideo.tv*/*whitepaper*/*whitepaper-spideo-aug2013.pdf* ».

Les contenus vidéos disponibles à l'utilisateur sont indexés à l'aide de mots clés ou « métadonnée » décrivant les caractéristiques du contenu, par exemple le genre, les personnalités clés, le contexte, l'ambiance, le style, la géographie, etc. Ces mots clés sont stockés en tant que données descriptives du contenu vidéo, par le serveur 103.

Par exemple, le contenu vidéo « Into the wild » (nom commercial) peut être indexé au travers de la métadonnée suivante : « Belles images », « Changer d'air », « Subtil », « Road Movie », « Changer de vie », « L'homme et la nature », « Paysage naturel », « Recherche de l'épanouissement », « Rebelle » et « Inspiré de faits réels ».

Le moteur de recherche, par exemple celui de SPIDEO, crée des liens entre les différents contenus possédant une ou plusieurs caractéristiques communes (mots clés). Typiquement, un modèle de type graphe est utilisé pour représenter les liens possibles. Les rapprochements entre contenus ne sont pas uniquement réalisés par comparaison exacte des mots clés respectifs, mais un thesaurus peut être utilisé pour lier ces contenus, sur la base également d'une synonymie, d'une antonymie, etc.

Des groupes de mots de clés, prenant par exemple la forme d'expressions sémantiques, peuvent être utilisés pour proposer des recommandations. Ces groupes peuvent être prédéfinis ou choisis automatiquement en fonction de différents critères, par exemple selon le nombre de contenus liés par le groupe de mots clés.

A titre illustratif, plusieurs expressions sémantiques peuvent s'appliquer au contenu « Into the wild » (nom commercial) pour produire des recommandations :
Pour l'expression sémantique « Road movie avec de belles images », les contenus « Retour à Cold Moutain », « Central do Brasil », « The Hit », etc. peuvent être recommandés. Pour l'expression sémantique « Pour changer de vie sur la recherche de l'épanouissement », les contenus « L'homme du train », « Yes man », etc. peuvent être recommandés. Pour l'expression sémantique « Films subtils avec des paysages naturels », les contenus « Le Guépard », « Dead Man », etc. peuvent être recommandés. Pour l'expression sémantique « Histoires vraies pour changer d'air », les contenus « Sept ans au tibet », « 127 heures », etc peuvent être recommandés (noms commerciaux).

Le dispositif 100 peut par exemple donner accès à un catalogue de plusieurs milliers de contenus vidéos (films, reportages, clips, etc.) et/ou à des centaines de chaînes de télévision, chacune diffusant des dizaines de programmes dans une seule journée, ce qui rend la navigation aléatoire (ou *« zapping* » en terminologie anglo-saxonne) fastidieuse.

Il convient donc d'améliorer la présentation des services et des contenus auxquels l'utilisateur a accès pour lui permettre de faire des choix pertinents et rapides concernant les contenus auxquels il souhaite avoir accès.

Les explications qui suivent s'appuient sur un exemple de guide électronique des programmes (EPG) pour un service de vidéo à la demande avec abonnement (SVOD). Seules des interfaces de l'EPG qui illustrent la présente invention sont reprises dans les dessins joints, les interfaces classiques de l'EPG étant connues de l'homme de l'art.

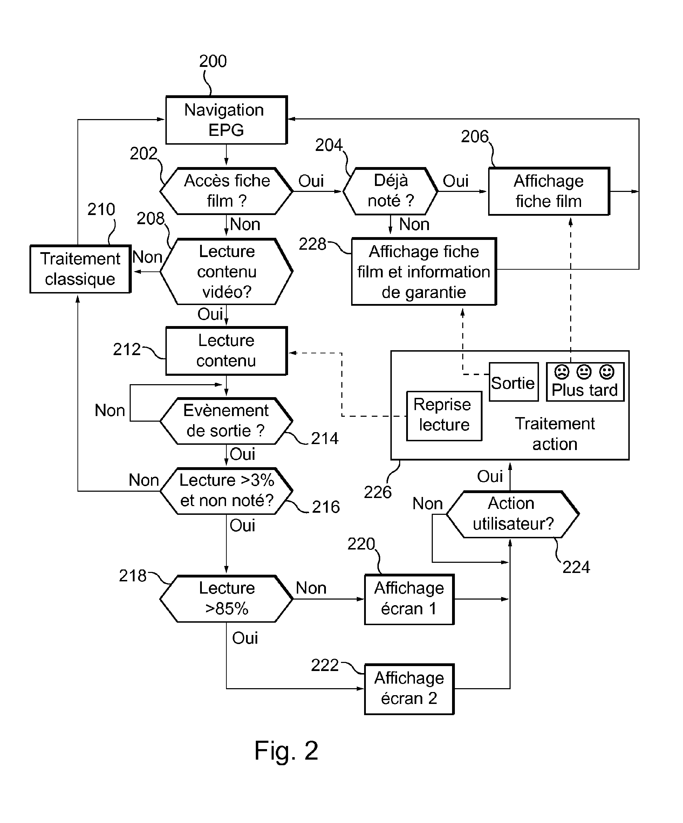

En référence à la **Figure 2** illustrant un mode de réalisation de l'invention, l'utilisateur est en cours de navigation dans l'EPG à l'aide de la télécommande 106, à l'étape 200. La **Figure 2** illustre des étapes principalement mises en oeuvre au niveau du dispositif utilisateur 100, bien que des précisions sur des opérations réalisées au niveau du serveur 103 et au niveau de l'écran 101 sont données.

Cette étape initiale peut inclure des opérations préalables, consistant par exemple en le lancement de l'application EPG dans le dispositif utilisateur 100, par le chargement des codes d'instruction stockés en mémoire du dispositif utilisateur 100 ; en la connexion de l'utilisateur à son compte abonné par des techniques classiques, par exemple au travers d'une interface de connexion affichée sur l'écran 101 au lancement de l'application EPG. Cette connexion met notamment en oeuvre des échanges d'authentification entre le dispositif utilisateur 101 et le module de gestion des profils du serveur 103, permettant de récupérer des paramètres de préférence de l'utilisateur qui peuvent définir une interface personnalisée de l'EPG ; et en la récupération de données descriptives de contenu pour leur affichage à l'intérieur de pages types définies par l'application EPG au cours de la navigation de l'utilisateur dans l'EPG.

En particulier, lors de l'étape 200, l'utilisateur navigue dans l'EPG à l'aide de touches directionnelles de la télécommande 106 par exemple, qui permettent de passer d'une icône sélectionnable à une autre. Comme largement connu, à chaque icône sélectionnable est associée une action telle que la navigation vers une autre page de l'EPG, le lancement de la lecture d'un contenu vidéo, la sortie de l'application EPG, etc. Cette action est déclenchée lorsque l'utilisateur sélectionne l'icône, par exemple en pressant un bouton de sélection de la télécommande 106.

Lorsque le dispositif utilisateur 100 reçoit un signal représentatif d'une instruction de sélection, par l'utilisateur, d'une icône proposée dans le guide électronique des programmes qui lui est affiché, le procédé sort de l'étape 200. En d'autres termes, lorsque l'utilisateur sélectionne une icône, par exemple en pressant un bouton de sélection de la télécommande 106, le procédé de la **Figure 2** passe à l'étape 202 où il est déterminé si l'action associée à l'icône sélectionnée est la navigation vers une fiche film ou fiche programme, c'est-à-dire une page de l'EPG qui fournit des informations complémentaires (données descriptives) sur un contenu vidéo. Une telle fiche film peut être accédée depuis la page d'accueil de l'EPG ou dans un ensemble de propositions résultant d'une recherche effectuée par l'utilisateur.

Dans l'affirmative du test 202, à réception du signal de sélection, l'application EPG exécutée dans le dispositif utilisateur 100 récupère les données descriptives associées au film sélectionné auprès du serveur 103, récupère, en mémoire, la définition de la page type « fiche film », puis intègre ces données descriptives dans la page type obtenue de sorte à commander (c'est-à-dire à générer un signal d'affichage apte à provoquer un affichage) l'affichage de la fiche film ainsi construite, sur l'écran 101. Il s'agit notamment de l'étape 206 lorsque le contenu vidéo sélectionné a déjà été noté comme décrit par la suite (test 204).

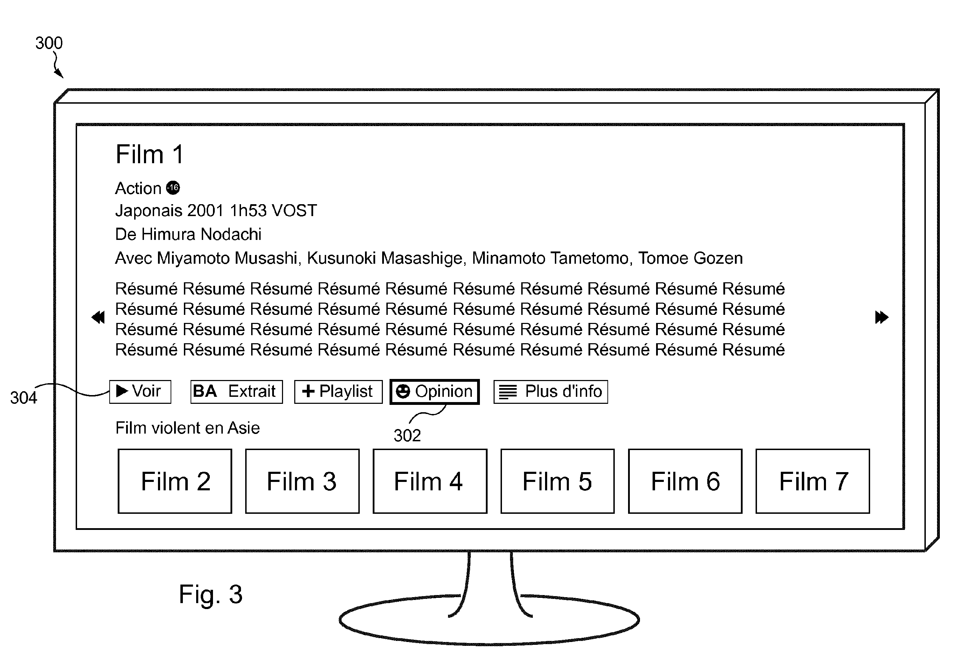

La **Figure 3** illustre schématiquement une page « fiche film » 300 de l'EPG pour la vidéo « FILM 1 » (nom commercial) dans laquelle un certain nombre d'informations complémentaires (résumé, acteurs, réalisateur, durée, etc.) est intégré. Comme la vidéo « FILM 1 » a déjà été notée par l'utilisateur connecté, une icône sélectionnable 302 indique la note attribuée. Cette icône sélectionnable 302 est également appelée élément sélectionnable de classement ou de notation dans le présent document.

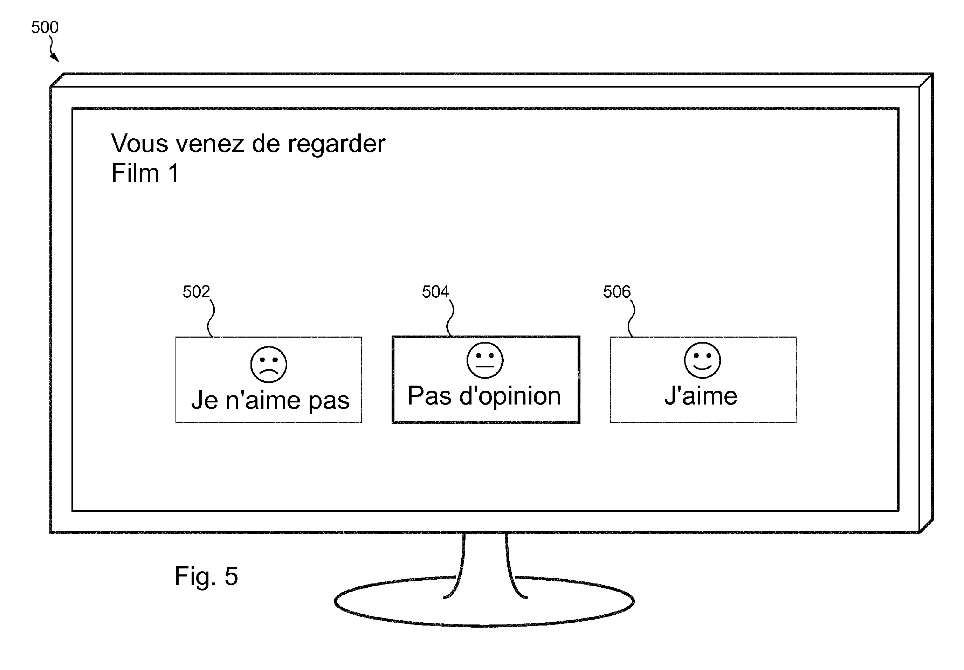

Cette icône sélectionnable 302 peut être sélectionnée par l'utilisateur pour modifier la note attribuée, par exemple dans une nouvelle page EPG offrant un menu interactif doté de trois icônes sélectionnables associées chacune à un niveau de classement ou note, par exemple trois smileys (nom commercial) comme représentés sur la **Figure 5** décrite ci-après. La sélection de l'un des trois smileys permet de mettre à jour en mémoire du serveur 103 la notation attribuée par l'utilisateur à la vidéo « FILM 1 ». Puis l'EPG retourne à la fiche film 300.

Dans la négative du test 202 il est déterminé, à l'étape 208, si l'action associée à l'icône sélectionnée est la lecture du contenu vidéo. En d'autres termes, si l'utilisateur demande à visionner le film sélectionné en sélectionnant par exemple l'icône sélectionnable « Voir » 304 dans la fiche film 300.

Si ce n'est pas le cas, le signal de sélection est traité de façon classique à l'étape 210 non décrite ici car il s'agit d'actions dans l'EPG qui ne sont pas directement concernées par la présente invention, par exemple l'accès pour consultation au profil de l'utilisateur, la modification de préférences dans le profil, une recherche conduite par l'utilisateur, la sortie de l'EPG, etc. Suite à l'étape 210, le procédé retourne à l'étape 200.

Si le test 208 s'avère positif, la lecture du contenu vidéo démarre à l'étape 212 (éventuellement depuis un point d'arrêt lors d'une lecture antérieure, point d'arrêt ayant été mémorisé par le serveur 103). La lecture du contenu vidéo est réalisée selon des techniques classiques : utilisation d'un lecteur multimédia embarqué dans le dispositif utilisateur 100 et récupération, par requêtes successives (streaming), du contenu vidéo auprès du serveur 103 pour affichage. L'étape 212 consiste ainsi à générer un signal d'affichage apte à provoquer un affichage, sur l'écran 101, du contenu vidéo sélectionné.

Puis le dispositif utilisateur 100 se met en attente, à l'étape 214, d'un événement de sortie mettant fin à l'affichage du contenu vidéo lors de sa lecture.

L'événement de sortie peut comprendre la réception d'un signal représentatif d'une instruction de l'utilisateur pour l'arrêt de la lecture du contenu vidéo, c'est-à-dire un signal de l'utilisateur (sur la télécommande 106 par exemple) demandant l'arrêt de la lecture.

En variante, l'événement de sortie peut comprendre l'atteinte de la fin du contenu vidéo, c'est-à-dire que le contenu vidéo se finit.

Lorsqu'un tel événement est détecté, un aspect de l'invention prévoit que l'EPG bascule vers un écran interactif choisi parmi plusieurs écrans interactifs en fonction du point de lecture du contenu vidéo lorsque cet événement de sortie se produit.

Notamment, il est prévu qu'en réponse à l'événement de sortie détecté, l'EPG sélectionne en mémoire un écran interactif parmi un premier écran interactif comprenant une ou plusieurs icônes sélectionnables pour noter le contenu vidéo lu et un deuxième écran interactif comprenant une ou plusieurs icônes sélectionnables différents du premier écran interactif pour noter le contenu vidéo lu, puis génère un signal d'affichage apte à provoquer un affichage, sur le dispositif d'affichage, du menu interactif sélectionné. Selon un aspect de l'invention, ladite sélection entre le premier et le deuxième écran interactif est fonction de la position de lecture du contenu vidéo lors de la détection de l'événement de sortie ;

Dans un mode de réalisation, la sélection d'un écran interactif parmi les premier et deuxième écrans interactifs est effectuée uniquement lorsque la position de lecture du contenu vidéo lors de la détection de l'événement de sortie est postérieure à une deuxième position seuil de lecture, comme illustré par la suite.

De même, l'utilisation des écrans interactifs permettant de noter le contenu vidéo ne peut avoir lieu que si aucune note n'a déjà été attribuée. Ladite sélection est donc fonction de l'existence d'une note déjà attribuée au contenu vidéo. Dans ce mode de réalisation, la sélection d'un écran interactif parmi les premier et deuxième écrans interactifs est effectuée uniquement lorsque ledit contenu vidéo n'a pas déjà été classé.

Cette approche multi-écrans interactifs correspond aux étapes 216 à 222 décrites maintenant.

Suite à l'étape 214 de réception d'un événement de sortie, le test 216 consiste à vérifier si suffisamment de contenu vidéo a été vu par l'utilisateur pour lui proposer un écran interactif permettant de noter ce contenu vidéo et si le contenu vidéo lu n'a pas déjà été noté par l'utilisateur.

Dans l'exemple de la figure, le test 216 pour vérifier si suffisamment de contenu vidéo a été vu revient à vérifier si la position courante de lecture de la vidéo lorsque l'événement de sortie survient est postérieure à un pourcentage seuil, par exemple 3%, de la longueur de la vidéo. Bien entendu d'autres pourcentages peuvent être utilisés ou des marqueurs intégrés dans la vidéo peuvent être prévus (auquel cas on vérifie si le marqueur correspondant a été dépassé ou non).

La position courante de lecture peut aisément être récupérée du lecteur multimédia mis en oeuvre par le dispositif utilisateur.

La vérification de si le contenu vidéo lu a déjà été noté peut simplement consister à récupérer, dans le profil de l'utilisateur sur le serveur 103, le classement associé à ce contenu vidéo lu. Si un classement est renseigné, alors la vérification conclut à l'existence d'une notation. Dans un mode de réalisation, le classement « Pas d'opinion » est considéré comme un classement attribué par l'utilisateur au contenu vidéo. Dans une variante, le classement « Pas d'opinion » peut être considéré comme l'absence de note attribuée au contenu vidéo.

Si moins de 3% de la vidéo a été lue lorsque l'utilisateur a arrêté sa lecture ou si une note a déjà été déclarée par l'utilisateur, un traitement classique 210 est opéré, à savoir par exemple le retour à l'EPG, par exemple sur la fiche film 300 correspondant au contenu vidéo arrêté. Bien entendu, d'autres pages que la fiche film peuvent être prévues, par exemple l'affichage d'un menu interactif permettant de reprendre immédiatement la lecture (auquel cas on reboucle sur l'étape 212) ou permettant de sauvegarder la position courante de lecture (dans le serveur 103) pour un visionnage ultérieur.

Dans l'affirmative du test 216, le test 218 consiste à vérifier si suffisamment de contenu vidéo a été vu par l'utilisateur pour qu'il puisse noter précisément ce contenu vidéo, auquel cas un écran interactif adapté peut lui être proposé. Dans l'exemple de la figure, le test 218 revient à vérifier si la position courante de lecture de la vidéo lorsque l'événement de sortie survient est postérieure à une position seuil, par exemple postérieure soit à un marqueur prévu dans le contenu vidéo lui-même (par exemple au début du générique de fin), soit à 85% (ou tout autre pourcentage) de la longueur de la vidéo.

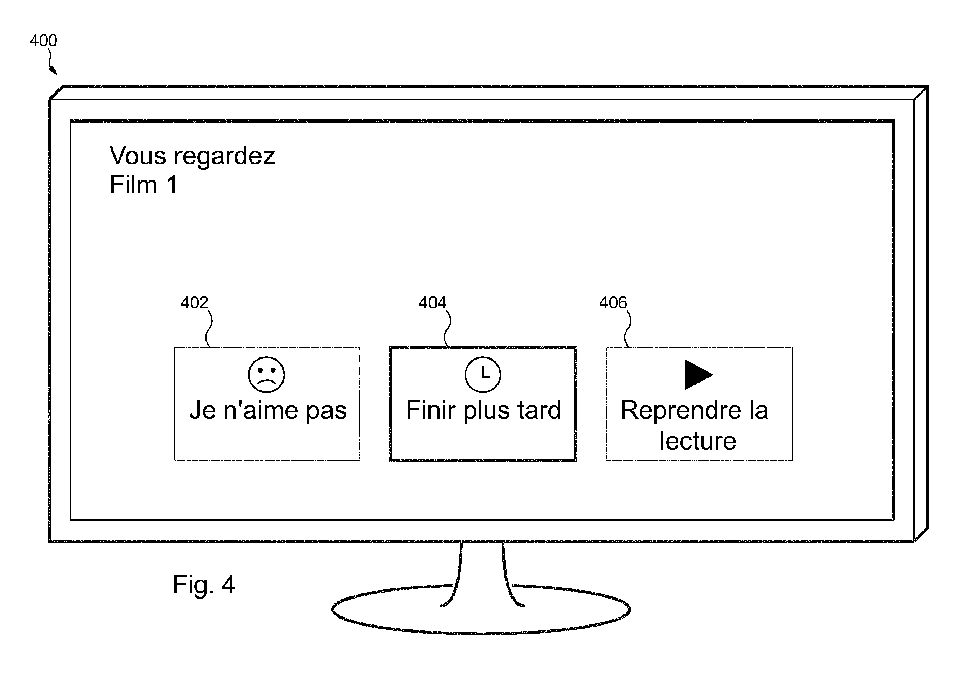

Si tel n'est pas le cas (sortie « non » du test 218), le premier écran interactif est sélectionné parmi les premier et deuxième écrans interactifs, puis affiché à l'utilisateur, à l'étape 220. Un exemple de ce premier écran interactif 400 est illustré en **Figure 4****.**

Si tel est le cas (sortie « oui » du test 218), le deuxième écran interactif est sélectionné parmi les premier et deuxième écrans interactifs, puis affiché à l'utilisateur, à l'étape 222. Un exemple de ce deuxième écran interactif 500 est illustré en **Figure 5****.**

Ainsi, la sélection des menus interactifs est contextuelle, selon la position courante de lecture : le premier menu interactif est sélectionné lorsque la position de lecture en sortie de lecture est antérieure à une première position seuil de lecture du contenu vidéo (par exemple 85%), et le deuxième menu interactif est sélectionné lorsque la position de lecture en sortie de lecture est postérieure à la première position seuil de lecture.

Les premier et deuxième écrans interactifs sont en mémoire du dispositif utilisateur 100 et plus précisément définis dans le code de l'application EPG exécutée comme pages types, les données descriptives telles le titre et une éventuelle image de fond pouvant être celles récupérées avec la fiche film affichée précédemment à l'utilisateur.

Comme montré sur l'exemple de la **Figure 4****,** le premier menu interactif 400 comprend un seul élément sélectionnable de classement du contenu vidéo, ici un smiley sélectionnable « Je n'aime pas » 402.

Dans cet exemple, le premier menu interactif comprend, outre l'icône 402, des éléments sélectionnables non dédiés au classement ou notation du contenu vidéo : une icône 406 sélectionnable par l'utilisateur pour poursuivre immédiatement la lecture du contenu vidéo et une autre icône 404 sélectionnable par l'utilisateur pour mémoriser la position courante de lecture du contenu vidéo lors de la détection de l'événement de sortie et permettre une reprise ultérieure de la lecture du contenu vidéo à partir de cette position courante mémorisée. A noter que la mémorisation a lieu au niveau du serveur 103, associée au profil de l'utilisateur connecté.

Comme montré sur l'exemple de la **Figure 5****,** le deuxième menu interactif 500 comprenant un nombre d'icônes de classement/notation sélectionnables différent de celui du premier menu interactif, et notamment plus d'icônes de notation que le premier menu interactif. En particulier, le deuxième menu interactif 500 comprend trois éléments sélectionnables de classement du contenu vidéo, ici un smiley sélectionnable « Je n'aime pas » 502 identique à l'icône 402, un smiley sélectionnable « Pas d'opinion » 504 et un smiley sélectionnable « J'aime » 506. Bien entendu, en variante, seules les icônes 502 et 506 peut être proposées à l'utilisateur dans ce deuxième menu interactif. En outre, d'autres visuels peuvent être utilisés avec un plus grand nombre de niveaux de classement, par exemple un classement allant de zéro à cinq étoiles.

Par ailleurs, une icône de sortie de l'écran proposé peut être prévue dans ledit écran affiché afin de passer cet écran sans noter le film lu. En variante, cette fonction de sortie sans notation peut être prévue en utilisant un bouton spécifique de la télécommande 106.

A noter que comme on peut considérer que le contenu vidéo a été entièrement consommé, ce deuxième écran interactif 500 ne comporte par les icônes 404 et 406, réduisant ainsi la complexité de navigation pour l'utilisateur.

Comme toujours, l'utilisateur est apte à naviguer entre les différentes icônes des menus interactifs, à l'aide par exemple des flèches directionnelles de la télécommande 106 et d'un bouton de sélection.

Suite aux étapes 220 et 222, le procédé se met en attente à l'étape 224 d'une action de l'utilisateur, notamment de la sélection d'une des icônes qui lui sont présentées.

Lorsqu'une telle action a lieu, c'est-à-dire que le dispositif utilisateur 100 reçoit un signal représentatif d'une instruction de sélection, par l'utilisateur dans le menu interactif affiché, d'une des icônes sélectionnables, l'étape 226 consiste à traiter la sélection par l'utilisateur.

Par exemple, la sélection de l'icône 406 conduit à la reprise de la lecture du contenu vidéo, c'est-à-dire un retour à l'étape 212 à partir de la position courante de lecture.

La sélection de l'icône 404 conduit à l'envoi, par le dispositif utilisateur 100 à destination du serveur 103, de la position courante de lecture pour mémorisation dans le profil de l'utilisateur.

La sélection de l'une quelconque des icônes de classement 402, 502, 504 et 506 conduit à noter le contenu vidéo visionné, puis à retourner à la fiche film 300 à l'étape 206 où la note attribuée est visible dans l'icône 302. Notamment, le classement ou note déclaré par l'utilisateur et donc attribué au contenu vidéo est stocké d'abord en mémoire du dispositif utilisateur 100 avant d'être transmis au serveur 103 pour mémorisation en association avec le profil de l'utilisateur connecté.

A noter que dans un mode de réalisation, l'icône « Pas d'opinion » 504 peut correspondre à l'absence de classement du contenu vidéo et donc à un retour direct sur la fiche film sans notation, c'est-à-dire vers l'étape 228 décrite par la suite. En variante et comme montré sur la Figure, une icône de sortie sans notation ou une touche spécifique (de sortie) de la télécommande peut être prévue pour aller directement à l'étape 228 sans notation du contenu vidéo lu.

Les classements ainsi déclarés par l'utilisateur sur les multiples contenus vidéos qu'il a pu visionner peuvent être utilisés dans un mécanisme de recommandation. Dans ce cas, le dispositif utilisateur 100 obtient une information de recommandation de contenu vidéo en fonction de l'élément de classement mémorisé pour l'au moins un contenu vidéo lu ; et génère un signal d'affichage apte à provoquer un affichage, sur le dispositif d'affichage, de l'information de recommandation dans le guide électronique des programmes, c'est-à-dire à afficher la recommandation sur une page de l'EPG.

L'utilisation de ces classements peut notamment avoir lieu dans une approche de recommandation selon un deuxième aspect de l'invention qui, d'une façon générale, est indépendante de ce qui a été décrit précédemment. Selon ce deuxième aspect de l'invention, le dispositif utilisateur 100 reçoit un signal représentatif d'une instruction de l'utilisateur naviguant dans le guide électronique des programmes, pour l'obtention de données supplémentaires d'un second contenu vidéo, par exemple en accédant à une nouvelle fiche film ; puis en réponse à la réception de l'instruction pour l'obtention de données supplémentaires, il obtient (par exemple sur requête au serveur distant 103), une information d'identification, parmi une pluralité de contenus vidéos stockés en mémoire, d'un contenu vidéo que l'utilisateur a préalablement classé dans un classe prédéfinie (par exemple « J'aime ») et qui est proche dudit second contenu vidéo compte tenu d'une distance mathématique calculée sur la base de mots clés d'indexation des contenus vidéo ; et il utilise l'information d'identification dudit contenu vidéo proche en tant qu'information de recommandation.

A noter que la recherche, par le serveur 103, du contenu vidéo proche de celui sélectionné par l'utilisateur peut mettre en oeuvre des mécanismes classiques de calcul de distances entre métadonnées associées à chaque contenu vidéo d'un catalogue de contenus vidéos.

Cette recherche par le serveur 103, et notamment le moteur de recommandation, peut comprend l'identification de tous les contenus vidéos que l'utilisateur connecté a déjà notés (par exemple « J'aime » ou au moins 4 étoiles sur une échelle de 0 à 5 étoiles) ; puis la détermination, parmi ces contenus vidéos déjà notés, du plus proche du contenu vidéo sélectionné par l'utilisateur. A noter que différents critères peuvent intervenir dans cette détermination, par exemple en tenant compte de préférences de l'utilisateur (par exemple des thématiques ou des mots clés renseignés) pour pondérer certains mots clés lors des calculs de distance entre contenus vidéos. En outre, afin de favoriser les contenus préférés de l'utilisateur (classement « J'aime »), une pondération peut être introduite lors des calculs de distance, cette pondération éloignant les contenus notés « Pas d'opinion » et « Je n'aime pas », comparativement aux contenus notés « J'aime ». Dans un mode de réalisation, les pondérations pour les contenus notés « Pas d'opinion » et « Je n'aime pas » peuvent être infinies afin de ne sélectionner que des contenus notés « Pas d'opinion ».

Une information d'identification du contenu vidéo proche ainsi déterminé est alors retournée par le moteur de recommandation, par exemple le module Kinograph de SPIDEO.

On voit que cette approche de recommandation est inverse à celle classiquement admise, puisqu'elle part d'un second contenu vidéo accédé par l'utilisateur pour lui indiquer quel autre contenu suffisamment proche il a déjà apprécié. La recommandation prend ainsi la forme d'une information de confirmation ou de garantie qui peut être présentée avec le second contenu vidéo sélectionné par l'utilisateur, afin de lui offrir une information supplémentaire l'aidant à confirmer son choix.

Ce deuxième aspect de l'invention est par exemple illustré par la **Figure 2****.** De retour à l'étape 200, si l'utilisateur accède à une nouvelle fiche film (sortie « oui » du test 202), il est déterminé à l'étape 204 si le contenu vidéo associé a déjà été noté par l'utilisateur. Dans l'affirmative, le procédé se poursuit à l'étape 206 déjà décrite en lien avec la **Figure 3****.**

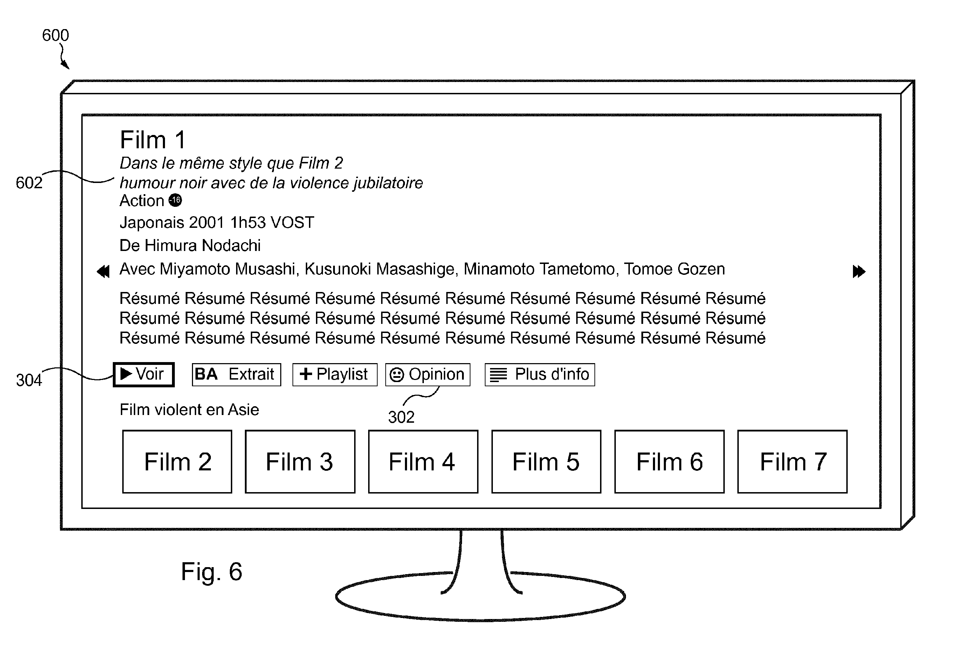

Dans la négative, la fiche film correspondante est affichée à l'utilisateur au cours de l'étape 228, cette fiche film comportant l'information de confirmation ou de garantie mentionnée ci-dessus. La **Figure 6** illustre une telle fiche film 600, toujours pour la vidéo « FILM 1 » lorsque celle-ci n'a pas encore été notée.

Dans cette fiche film 600, on retrouve les icônes 302 et 304 permettant respectivement de noter et de lire le contenu vidéo. L'information de recommandation est représentée par la référence 602 qui comprend le titre « FILM 2 » d'un autre film que l'utilisateur a aimé, comme identifiant de contenu vidéo et qui comprend au moins un mot clé d'indexation liant le second contenu vidéo (dont la fiche film est accédée) audit contenu vidéo proche, ici sous la forme d'une expression sémantique « Humour noir avec de la violence jubilatoire ».

Dans cet exemple de la **Figure 6****,** en réponse à la réception de l'instruction pour l'obtention de données supplémentaires (c'est-à-dire l'accès à la fiche film du second contenu vidéo), le dispositif utilisateur 100 obtient (du serveur 103) des données supplémentaires du second contenu vidéo ; puis génère un signal d'affichage apte à provoquer un affichage, sur le dispositif d'affichage, des données supplémentaires du second contenu vidéo en même temps que l'information de recommandation, typiquement par la fiche film 600 conforme à la **Figure 6****.**

Bien entendu, dès lors que l'utilisateur déclare un classement pour la vidéo « FILM 1 » en sélectionnant l'icône 302, la fiche film 300 est affichée.

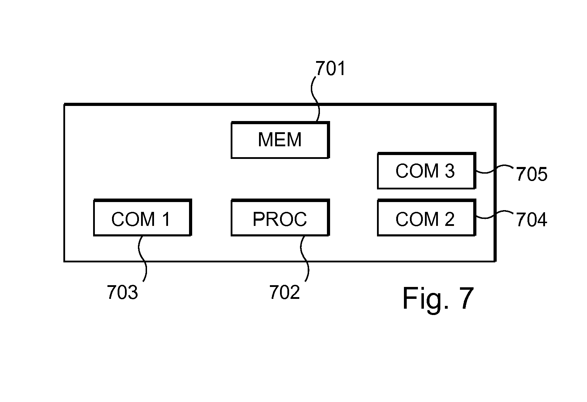

La **Figure 7** illustre un dispositif utilisateur selon un mode de réalisation. Le dispositif 100 de la **Figure 1** peut par exemple avoir une structure telle que décrite ci-après. Le dispositif 700 comporte une unité de mémoire 701 (MEM). Cette unité de mémoire comporte une mémoire vive pour stocker de manière non durable des données de calcul utilisées lors de la mise en oeuvre d'un procédé selon un mode de réalisation. L'unité de mémoire comporte par ailleurs une mémoire non volatile (par exemple du type EEPROM) pour stocker par exemple un programme d'ordinateur selon un mode de réalisation pour son exécution par un processeur (non représenté) d'une unité de traitement 702 (PROC) du dispositif.

Le dispositif comporte par ailleurs une première unité de communication 703 (COM1) pour mettre en oeuvre des communications, via un réseau de communication, notamment avec un serveur distant afin de recevoir des données de service (EPG) et des données de contenu vidéo.

Le dispositif comporte également une deuxième unité de communication 704 (COM2) pour transmettre des données d'affichage et des commandes d'affichage vers un écran et une troisième unité de communication 705 (COM3) pour recevoir des commandes de la part d'une télécommande permettant ainsi à un utilisateur de naviguer parmi les fonctionnalités offertes par le dispositif.

Bien entendu, la présente invention ne se limite pas aux formes de réalisation décrites, d'autres variantes et combinaisons de caractéristiques sont possibles.

La présente invention a été décrite et illustrée dans la présente description détaillée en référence aux figures jointes. Toutefois la présente invention ne se limite pas aux formes de réalisation présentées. D'autres variantes et modes de réalisation peuvent être déduits et mis en oeuvre par la personne du métier à la lecture de la présente description et des figures annexées.

Dans les revendications, le terme « comporter » n'exclut pas d'autres éléments ou d'autres étapes. L'article indéfini « un » n'exclut pas le pluriel. Un seul processeur ou plusieurs autres unités peuvent être utilisées pour mettre en oeuvre l'invention. Les différentes caractéristiques présentées et/ou revendiquées peuvent être avantageusement combinées. Leur présence dans la description ou dans des revendications dépendantes différentes, n'exclut pas en effet la possibilité de les combiner. Les signes de référence ne sauraient être compris comme limitant la portée de l'invention.

## Revendications

1. Procédé comprenant les étapes suivantes, dans un dispositif utilisateur (100) :
recevoir (208) un signal représentatif d'une instruction de sélection, par un utilisateur, d'au moins un contenu vidéo dans un guide électronique des programmes affiché à l'utilisateur ;
générer (212) un signal d'affichage apte à provoquer un affichage, sur un dispositif d'affichage (101) relié audit dispositif utilisateur, du contenu vidéo sélectionné ;
détecter (214) un événement de sortie mettant fin à l'affichage du contenu vidéo lors de sa lecture ;
en réponse à l'événement de sortie détecté, sélectionner (220, 222) en mémoire un écran interactif parmi un premier écran interactif (400) comprenant un ou plusieurs éléments de classement (402) sélectionnables pour classer le contenu vidéo lu et un deuxième écran interactif (500) comprenant un ou plusieurs éléments de classement (502, 504, 506) sélectionnables différents du premier écran interactif pour classer le contenu vidéo lu, ladite sélection entre le premier et le deuxième écran interactif étant fonction de la position de lecture du contenu vidéo lors de la détection de l'événement de sortie ; et générer un signal d'affichage apte à provoquer un affichage, sur le dispositif d'affichage, du menu interactif sélectionné ;
recevoir (224) un signal représentatif d'une instruction de sélection, par l'utilisateur dans le menu interactif affiché, du ou de l'un des éléments sélectionnables de classement pour le contenu vidéo ;
stocker en mémoire une information représentative de l'élément de classement sélectionné pour l'au moins un contenu vidéo lu ;
obtenir une information de recommandation de contenu vidéo en fonction de l'élément de classement mémorisé pour l'au moins un contenu vidéo lu ; et
générer (228) un signal d'affichage apte à provoquer un affichage, sur le dispositif d'affichage, de l'information de recommandation (602) dans le guide électronique des programmes.

2. Procédé selon la revendication 1, dans lequel le premier menu interactif (400) est sélectionné lorsque la position de lecture en sortie de lecture est antérieure à une première position seuil de lecture du contenu vidéo, et le deuxième menu interactif (500), comprenant un nombre d'éléments de classement sélectionnables (502, 504, 506) différent de celui du premier menu interactif, est sélectionné lorsque la position de lecture en sortie de lecture est postérieure à la première position seuil de lecture.

3. Procédé selon la revendication 2, dans lequel la première position seuil de lecture est définie par un marqueur temporel inséré dans le contenu vidéo lu ou est définie par un pourcentage préfixé dudit contenu vidéo lu.

4. Procédé selon la revendication 2 ou 3, dans lequel le premier menu interactif (400) comprend un seul élément (402) sélectionnable de classement du contenu vidéo et le deuxième menu interactif (500) comprend plusieurs éléments (502, 504, 506) sélectionnables de classement du contenu vidéo.

5. Procédé selon la revendication 4, dans lequel le premier menu interactif (400) comprend, outre l'élément (402) sélectionnable de classement du contenu vidéo, un élément (406) sélectionnable par l'utilisateur pour poursuivre immédiatement la lecture du contenu vidéo et/ou un autre élément (404) sélectionnable par l'utilisateur pour mémoriser la position de lecture du contenu vidéo lors de la détection de l'événement de sortie et permettre une reprise ultérieure de la lecture du contenu vidéo à partir de ladite position de lecture.

6. Procédé selon l'une des revendications 2 à 5, dans lequel la sélection d'un écran interactif parmi les premier et deuxième écrans interactifs est effectuée uniquement lorsque la position de lecture du contenu vidéo lors de la détection de l'événement de sortie est postérieure à une deuxième position seuil de lecture.

7. Procédé selon l'une des revendications 2 à 6, dans lequel la sélection d'un écran interactif parmi les premier et deuxième écrans interactifs est effectuée uniquement lorsque ledit contenu vidéo n'a pas déjà été classé.

8. Procédé selon l'une des revendications 1 à 7, dans lequel le ou les éléments sélectionnables de classement sont une ou des icônes distinctes sélectionnables par l'utilisateur.

9. Procédé selon l'une des revendications 1 à 8, dans lequel obtenir une information de recommandation de contenu vidéo comprend :
recevoir (202) un signal représentatif d'une instruction de l'utilisateur naviguant dans le guide électronique des programmes, pour l'obtention de données supplémentaires d'un second contenu vidéo;
en réponse à la réception de l'instruction pour l'obtention de données supplémentaires, obtenir une information d'identification (602), parmi une pluralité de contenus vidéos stockés en mémoire, d'un contenu vidéo que l'utilisateur a préalablement classé dans un classe prédéfinie et qui est proche dudit second contenu vidéo compte tenu d'une distance mathématique calculée sur la base de mots clés d'indexation des contenus vidéo ; et
utiliser (228) l'information d'identification obtenue dudit contenu vidéo proche en tant qu'information de recommandation.

10. Procédé selon la revendication 9, dans lequel ladite information de recommandation (602) comprend en outre au moins un mot clé d'indexation liant le second contenu vidéo audit contenu vidéo proche.

11. Procédé selon la revendication 9 ou 10, comprenant en outre, en réponse à la réception de l'instruction pour l'obtention de données supplémentaires :
obtenir des données supplémentaires du second contenu vidéo ;
générer (228) un signal d'affichage apte à provoquer un affichage, sur le dispositif d'affichage (101), des données supplémentaires du second contenu vidéo en même temps que l'information de recommandation (602).

12. Procédé selon l'une des revendications 1 à 11, dans lequel l'événement de sortie comprend la réception d'un signal représentatif d'une instruction de l'utilisateur pour l'arrêt de la lecture du contenu vidéo ou comprend l'atteinte de la fin du contenu vidéo.

13. Dispositif utilisateur (100) comportant une unité de traitement (702) configurée pour :
recevoir un signal représentatif d'une instruction de sélection, par un utilisateur, d'au moins un contenu vidéo dans un guide électronique des programmes affiché à l'utilisateur ;
générer un signal d'affichage apte à provoquer un affichage, sur un dispositif d'affichage (101) relié audit dispositif utilisateur, du contenu vidéo sélectionné ;
détecter un événement de sortie mettant fin à l'affichage du contenu vidéo lors de sa lecture ;
en réponse à l'événement de sortie détecté, sélectionner en mémoire un écran interactif parmi un premier écran interactif (400) comprenant un ou plusieurs éléments de classement (402) sélectionnables pour classer le contenu vidéo lu et un deuxième écran interactif (500) comprenant un ou plusieurs éléments de classement (502, 504, 506) sélectionnables différents du premier écran interactif pour classer le contenu vidéo lu, ladite sélection entre le premier et le deuxième écran interactif étant fonction de la position de lecture du contenu vidéo lors de la détection de l'événement de sortie ; et générer un signal d'affichage apte à provoquer un affichage, sur le dispositif d'affichage, du menu interactif sélectionné ;
recevoir un signal représentatif d'une instruction de sélection, par l'utilisateur dans le menu interactif affiché, du ou de l'un des éléments sélectionnables de classement pour le contenu vidéo ;
stocker en mémoire une information représentative de l'élément de classement sélectionné pour l'au moins un contenu vidéo lu ;
obtenir une information de recommandation de contenu vidéo en fonction de l'élément de classement mémorisé pour l'au moins un contenu vidéo lu ; et
générer un signal d'affichage apte à provoquer un affichage, sur le dispositif d'affichage, de l'information de recommandation dans le guide électronique des programmes,
et comportant une unité de communication (704) configurée pour transmettre les signaux d'affichage au dispositif d'affichage (101).
